# EUROPÄISCHE PATENTSCHRIFT

(11) **EP 2 344 595 B1**
(45) Veröffentlichungstag und Bekanntmachung des Hinweises auf die Patenterteilung: **11.12.2013**
(21) Anmeldenummer: 09748264.0
(22) Anmeldetag: 02.10.2009
(51) Int. Cl.: C09D 133/00, C08L 33/00, C08L 79/08

(54) **WÄSSRIGER LACK ZUR REDUKTION DER FORMALDEHYDEMISSION AUS HOLZWERKSTOFFEN**
AQUEOUS LACQUER FOR REDUCTION OF FORMALDEHYDE EMISSION FROM WOOD MATERIALS
LAQUE AQUEUSE POUR LA RÉDUCTION DE L ÉMISSION DE FORMALDÉHYDE DES MATÉRIAUX DÉRIVÉS DU BOIS

(30) Priorität: 02.10.2008 DE 102008049963
(43) Veröffentlichungstag der Anmeldung: 20.07.2011
(73) Patentinhaber: Treffert Coatings GmbH, 63754 Alzenau (DE)
(72) Erfinder: NOLL, Eberhard, 63755 Alzenau (DE); SCHOLL, Frank, 61352 Bad Homburg (DE); SCHOLZ, Wolfgang, 60594 Frankfurt am Main (DE)
(74) Vertreter: Deckers, Hellmuth Alexander
(86) Internationale Anmeldenummer: PCT/EP2009/062869
(87) Internationale Veröffentlichungsnummer: WO 2010/037866

(56) Entgegenhaltungen:
- US-A- 3 549 566
- US-A- 4 082 884
- US-A- 4 273 833
- US-B1- 6 277 437

## Beschreibung

Die Erfindung betrifft einen wässrigen Lack, der in Form einer Beschichtung auf Formteilen aus Holzwerkstoffen die Emission von Formaldehyd aus diesen senkt. Weiter betrifft die Erfindung ein Verfahren zur Reduktion der Formaldehydemission aus Holzwerkstoffen insbesondere in Form von Platten durch flächiges Aufbringen eines wässrigen Lackes.

Als kostengünstige und ressourcenschonende Alternative zu Massivholz haben Holzwerkstoffe eine große Bedeutung insbesondere im Möbelbau und als Baumaterialien insbesondere für Fußböden erlangt. Zur Herstellung von Formteilen aus Holzwerkstoffen werden Holzteile oder Holzpartikel aus verschiedenen Hölzern und in unterschiedlicher Stärke wie Holzstreifen, Holzspäne, Holzschrot oder Holzfasern üblicherweise mit natürlichen oder synthetischen Bindemitteln und gegebenenfalls unter Zugabe von Additiven wie insbesondere Brandschutzmittel oder Füllstoffen zu Platten oder Profilen verpresst und gehärtet. Häufig werden als Bindemittel formaldehydhaltige Klebstoffe eingesetzt, insbesondere Aminoplastharze auf Basis von Harnstoff oder Melamin oder deren Mischungen. Diese Harze werden durch Polyaddition und -kondensation von Formaldehyd mit Aminoplastbildnern wie Harnstoff oder Melamin oder deren Mischungen hergestellt. Die Klebeeigenschaften dieser Harze lassen sich durch Einsatz eines stöchiometrischen Überschusses an Formaldehyd bei deren Synthese verbessern. In den fertigen Holzwerkstoffteilen kann daher freier Formaldehyd vorliegen, aber auch durch Zersetzung der Aminoplastharze unter Einfluss von Wärme und Feuchtigkeit kann Formaldehyd abgespalten werden. Dieser in den Holzwerkstoff-Teilen enthaltene freie Formaldehyd und der während der Lebensdauer des Holzwerkstoffs durch Abspaltung freigesetzte Formaldehyd können an die Umgebung abgegeben werden.

Da Formaldehyd als Allergen oder Co-Allergen wirken kann, ist es erwünscht, die Abgabe von Formaldehyd an die Umgebung möglichst zu minimieren.

Daher wurden bereits verschiedene Anstrengungen unternommen, die Emission von Formaldehyd aus Holzwerkstoffteilen zu reduzieren. So werden gemäß dem Patent EP 0 006 486 B1 Spanplatten mit wässrigen Harnstofflösungen besprüht. Eine Beschichtung von Holzwerkstoffteilen mit Mischungen aus Harnstoff, Hydrazin oder Hydraziden, reduzierenden Zucker(derivate)n, und nichtflüchtigen Aminen ist in der Patentanmeldung JP 2002-273 145 A beschrieben. In der Patentanmeldung WO 2007/082 837 A1 wird ein Verfahren beschrieben, bei dem in die zur Herstellung von Holzwerkstoffen verwendeten Span- oder Faserkuchen, auf den gepressten Holzwerkstoff oder auf zur Beschichtung von Holzwerkstoffteilen verwendeten Folien ein Polyamin mit mindestens sechs primären oder sekundären Aminogruppen, gegebenenfalls in Mischung mit Additiven oder mit Harnstoff, aufgebracht wird.

Derartige Beschichtungen verschlechtern jedoch die Haftung von dekorativen Beschichtungen auf den Holzwerkstoffteilen, die wegen des ansonsten unscheinbaren Aussehens dieser Teile erwünscht sind.

Besonders bei den sogenannten PDL-Platten ("Printed Decorative Laminate"), bei denen im Unterschied zu herkömmlichen Laminaten mit bedruckten Deko-Folien das Dekor direkt auf eine Holzwerkstoffplatte aufgedruckt wird, ist eine gute Haftung der dekorativen Beschichtung auf der Holzwerkstoffplatte essentiell; jede auch die Oberfläche erfassende Behandlung des Holzwerkstoffs kann zu Unregelmäßigkeiten in der Haftung und der Optik des lackierten Produkts führen, wodurch die Qualitätsanmutung der Oberflächen empfindlich leidet. Die optischen Eigenschaften wie Glanz, Reflexion, Verzerrung des reflektierten Bildes an hochglänzenden Oberflächen ("DOI" = englisch "distinctness of image") sind sehr empfindliche Indikatoren für Oberflächenunregelmäßigkeiten. Der Zusatz von Harnstoff erhöht die Feuchtigkeitsempfindlichkeit von Holzwerkstoffen, auch penetrieren Harnstofflösungen nur ungenügend in den Holzwerkstoff und führen beim Trocknen häufig zu Ausblühungen an den Oberflächen. Die Verwendung von Hydrazin ist aus toxikologischen Gründen ausgeschlossen.

Es besteht daher die Aufgabe, eine Methode zur Verringerung der Formaldehydemission aus Holzwerkstoffteilen zu finden, die einerseits die Abgabe von Formaldehyd aus Holzwerkstoffteilen an die Umgebung deutlich und nachhaltig senkt, und andererseits die Möglichkeiten zur dekorativen Beschichtung dieser Teile insbesondere durch Aufbringen von Beschichtungsmitteln, auch bei mehrlagigen Beschichtungen oder direkten Aufdruck nicht oder nur unwesentlich verschlechtert.

Es wurde gefunden, dass ein Lack auf Basis von in Wasser dispergierten Acrylatcopolymeren mit einem Zusatz an Aminopolyalkyleniminen, der auf die Rückseite (also der Druckseite abgewandten Seite) von direkt bedruckten Laminaten appliziert wird, die Emission von Formaldehyd aus den so behandelten Holzwerkstoffplatten um bis zu 90 % reduziert.

Unter "Lack" wird hier wie im technischen Gebiet üblich ein flüssiger oder pastenförmiger, gegebenenfalls pigmentierter Beschichtungsstoff verstanden, der auf einen Untergrund aufgebracht eine deckende Beschichtung mit schützenden dekorativen oder spezifischen technischen Eigenschaften ergibt.

Die Erfindung betrifft daher einen Lack wie er in den Ansprüchen beschrieben ist.

Die Trocknung des erfindungsgemäßen Lackes erfolgt bevorzugt physikalisch, also durch Koaleszenz der in Wasser dispergierten Latexpartikel aus dem mindestens einen Acrylatcopolymer oberhalb der minimalen Filmbildungstemperatur ("MFT") des verwendeten Acrylatcopolymeren oder der Mischung von zwei oder mehreren Acrylatcopolymeren, und Verdrängen und Verdampfen des Wassers nach den bekannten Mechanismen.

Es werden mindestens zwei Acrylatcopolymere als Bestandteile für den erfindungsgemäßen Lack eingesetzt, wobei ein Acrylatcopolymer eine MFT im Bereich von - 20 °C bis 55 °C, und ein zweites eine MFT von 60 °C bis 130 °C aufweist.

Eine weitere bevorzugte Ausführungsform ergibt sich durch Verwendung von mindestens zwei Acrylatcopolymeren, wobei ein Styrol-Acrylat-Copolymer C1 mit einer MFT im Bereich von - 20 °C bis 55 °C und ein Acrylatcopolymer C2 mit einer MFT im Bereich von 60 °C bis 130 °C eingesetzt werden. Die Massenanteile der beiden Acrylatcopolymeren, bezogen auf die Gesamtmasse aller in der Mischung vorhandenen Acrylatcopolymeren, betragen bevorzugt 30 % bis 70 % für das Styrol-Acrylat-Copolymer C1, und 70 % bis 30 % für Acrylatcopolymer C2. Das Acrylatcopolymer C2 ist bevorzugt frei von Styrol.

Eine weitere bevorzugte Ausführungsform ergibt sich bei Verwendung von drei Acrylatcopolymeren, wobei zusätzlich zu den oben genannten Copolymeren C1 und C2 ein weiteres styrolfreies Acrylatcopolymer C3 mit einer MFT im Bereich von -25 °C bis 40 °C eingesetzt wird. Die Massenanteile dieser drei Copolymere an der Gesamtmasse der Copolymeren betragen dann bevorzugt 20 % bis 68 % für das Styrol-Acrylat-Copolymer C1, 70 % bis 30 % für Acrylatcopolymer C2, und 2 % bis 15 % für das Acrylatcopolymer C3.

Weiter ist es bevorzugt, bezogen auf die Masse der Mischung von Acrylatcopolymeren und Aminoalkylenpolyimin einen Massenanteil an Aminoalkylenpolyimin von 5 % bis 20 % in dem wässrigen Lack einzusetzen. Dabei hat es sich als günstig erwiesen, das Aminoalkylenpolyimin vor dem Zusatz zu der Dispersion der Acrylatcopolymeren zunächst mit Wasser auf einen Festkörper-Massenanteil von weniger als 50 % zu verdünnen. Es scheint, als ob die Verteilung in der Acrylatcopolymerdispersion dann leichter und gleichmäßiger von statten geht. Die durch die Verdünnung bedingte niedrigere Viskosität eines gemäß diesem Verfahren hergestellten Lacks kann durch Zusatz von Verdickern beispielsweise auf Basis von Polyurethanen einfach auf das gewünschte Maß erhöht werden.

Es ist weiter bevorzugt, als Aminoalkylenpolyimin ein Oligomer oder Polymer mit einem gewichtsmittleren Polymerisationsgrad von 10 bis 2500, besonders bevorzugt 13 bis 100, und insbesondere 15 bis 80 einzusetzen. Weiter ist es bevorzugt, lineare Diaminopolyalkylenimine, besonders Diaminopolyäthylenimine einzusetzen. Dabei kann ein Teil, bevorzugt bis zu 30 % der Masse des Aminoalkylenpolyimins, durch ein Aminopolyoxyalkylen ersetzt werden, insbesondere durch Diaminopolyoxypropylen, das unter dem Handelnamen "Jeffamine" erhältlich ist.

Die Lacke werden durch Zusatz üblicher Additive (Entschäumer, Verdicker, insbesondere Acrylatverdicker, Pigmentbenetzungsmittel, Antiabsetzmittel) sowie von Pigmenten und Füllstoffen ergänzt, und gut homogenisiert. Eine günstige Variante ist dabei, Pigmente, Füllstoffe und Additive zunächst mit mindestens einem Teil des Aminoalkylenpolyimins zu homogenisieren, und diesem Homogenisat danach eine wässrige Dispersion enthaltend das mindestens eine Acrylatcopolymer zuzusetzen.

Der Auftrag auf ein Substrat, insbesondere eine HDF- oder MDF-Platte, erfolgt durch Aufstreichen oder Aufwalzen auf die Rückseite der direkt bedruckten Platte, vorzugsweise mit einer Auftragsmenge von 5 g/m² bis 25 g/m².

Die Erfindung wird durch die nachfolgenden Beispiele erläutert, dabei bedeuten Angaben mit der Einheit "%" stets Massenanteile (Masse des gelösten oder dispergierten Stoffs, geteilt durch die Masse der Lösung oder Dispersion). "Mw" ist die massenmittlere (auch als "gewichtsmittlere" bzeichnete) molare Masse, bestimmt durch Gelpermeationschromatographie mit Polystyrol-Standards. Die Viskosität wird mit einem Kegel-Platte-Viskosimeter bei 23 °C und 100 s⁻¹ gemessen.

### Beispiele

### Lackherstellung

Gemäß Ansetztabelle wurde der Referenzlack angesetzt:

**Tabelle 1 Zusammensetzung des Referenzlackes**

| Komponente | Masse in g |
|---|---|
| Wasser | 8,31 |
| Styrol-Acrylat-Dispersion 1 (= C1) | 23,4 |
| Acrylat-Dispersion 2 (= C2) | 25,0 |
| Acrylat-Dispersion 3 (= C3) | 2,91 |
| 2-Dimethylaminoäthanol | 0,13 |
| Polyurethanverdicker | 0,38 |
| Entschäumer (Polyäthersiloxan) | 0,15 |
| Polyacrylat-Disergiermittel | 0,82 |
| Titandioxid | 1,89 |
| Pigment Yellow 42 | 3,48 |
| Pigment Red 101 | 4,17 |
| Calciumcarbonat | 17,10 |
| Kaolin | 3,27 |
| Bariumsulfat | 5,06 |
| Rußdispersion | 0,1 |
| Mono-n-butoxydipropylenglykol | 1,51 |
| Octylinonzubereitung | 0,2 |
| Wasser | 2,12 |
| Dispersion 1: MFT: 33 °C; Festkörper-Massenanteil: 45 % (Styrol-Acrylat, = C1) | |
| Dispersion 2: MFT 105 °C; Festkörper-Massenanteil: 30 %, styrolfrei (= C2) | |
| Dispersion 3: MFT: 10 °C; Festkörper-Massenanteil:50 %, styrolfrei (= C3) | |
| Octylinon: formaldehydfreies Konservierungsmittel (Biocid) | |

Der Lack besaß folgende Kennzahlen:

| | |
|---|---|
| Auslaufzeit (20 °C, 6 mm Becher) | 75 s |
| pH | 9,2 |

### Beispiel 1:

Zu 100 g des Referenzlacks wurden 50 g der Lösung von Beispiel 5 zugemischt. Der Lack besaß folgende Kennzahlen:

| | |
|---|---|
| Auslaufzeit (20 °C, 6 mm Becher) | 7 s |
| pH | 10,8 |

### Beispiel 2:

Zu 100 g des Referenzlacks wurden 50 g der Lösung von Beispiel 6 zugemischt. Der Lack besaß folgende Kennzahlen:

| | |
|---|---|
| Auslaufzeit (20 °C, 6 mm-Becher) | 7 s |
| pH | 10,8 |

### Beispiel 3:

Zu 100 g des Referenzlacks wurden 11 g einer wässrigen Diaminopolyäthyleniminlösung (Massenanteil an PEI: 50 %, Viskosität bei 20 °C: 200 mPa·s; Mw 800 g/mol) zudosiert. Der Lack besaß folgende Kennzahlen:

| | |
|---|---|
| Auslaufzeit (20 °C, 6 mm-Becher) | 14 s |
| pH | 10,3 |

Aufzug Glasplatte Glatt (nach Trocknen bei 80 °C während fünf Minuten)

### Beispiel 4:

Zu 100 g des Vergleichbeispiels wurden 11 g einer wässrigen Diaminopolyäthyleniminlösung (Massenanteil an PEI: 50 %, Viskosität bei 20 °C: 1.100 mPa·s; Mw 5.000 g/mol) zudosiert. Der Lack besaß folgende Kennzahlen:

| | |
|---|---|
| Auslaufzeit (20 °C, 6 mm-Becher) | 23 s |
| pH | 10,3 |

Aufzug Glasplatte Glatt (nach Trocknen bei 80 °C während fünf Minuten)

### Beispiel 5:

100 g einer wässrigen Lösung eines Diaminopolyäthylenimins (Massenanteil an PEI: 50 %, Viskosität bei 20 °C: 200 mPas; Mw 800 g/mol) wurde mittels Wasserzugabe auf einen Massenanteil von 40 % verdünnt.

| | |
|---|---|
| Auslaufzeit (20 °C, 6 mm-Becher) | 9 s |
| pH | 11,4 |

### Beispiel 6:

100 g einer wässrigen Lösung eines Diaminopolyäthylenimins (Massenanteil an PEI: 50 %, Viskosität bei 20 °C: 1100 mPas; Mw 5000 g/mol) wurde mittels Wasserzugabe auf einen Massenanteil von 40 % verdünnt.

| | |
|---|---|
| Auslaufzeit (20 °C, 6 mm-Becher) | 13 s |
| pH | 11,3 |

### Lackapplikation und Bestimmung der Formaldehyd-Abspaltung:

Als Substratmaterial wurde eine handelsübliche HDF-Platte verwendet, welche einseitig mit einem UV-gehärten Lack beschichtet war. Auf der Rückseite wurde mittels eines Walzenauftrags die erfindungsgemäßen Lacke der Beispiele 1 bis 4 und der

Referenzlack als Vergleichbeispiel appliziert.

**Tabelle 2 Testergebnisse**

| | Auftrag in g/m² | CH₂O-Abgabe¹ in mg/(m² h) |
|---|---|---|
| keine Lackierung | 0 | 4,0 |
| Referenzlack | 12 | 2,1 |
| Beispiel 1 | 17 | < 0,1 |
| Beispiel 2 | 17 | < 0,1 |
| Beispiel 3 | 11 | 1,25 |
| Beispiel 4 | 13 | 1,2 |

| | | |
|---|---|---|
| 1) gemäß DIN EN 717-1, Ausgabe 2005-01: Holzwerkstoffe - Bestimmung der Formaldehydabgabe; Teil 2: Formaldehydabgabe nach der Gasanalyse-Methode | | |

In den Beispielen 1 und 2, bei denen eine auf einen Festkörper-Massenanteil von ca. 40 % verdünnte Polyäthylenimin-Lösung der Dispersion der Acrylat-Copolymeren zugesetzt worden war, ist die Reduktion der Formaldehydabspaltung deutlicher ausgeprägt als in den Beispielen 3 und 4. Dabei wirkte sich neben der erhöhten Wirkstoffkonzentration auch die etwas erhöhte Auftragsmenge günstig auf die Verringerung der Formaldehydemission aus.

## Patentansprüche

1. Lack enthaltend mindestens zwei Acrylatcopolymere als Bestandteile, ein Aminopolyalkylenimin, und Wasser, **dadurch gekennzeichnet, dass** als Bestandteile ein Acrylatcopolymer mit einer Mindest-Filmbildetemperatur im Bereich von - 20 °C bis 55 °C, und ein zweites Acrylatcopolymer mit einer Mindest-Filmbildetemperatur von 60 °C bis 130 °C enthalten sind.

2. Lack nach Anspruch 1, **dadurch gekennzeichnet, dass** als Bestandteile ein Styrol-Acrylat-Copolymer C1 mit einer Mindest-Filmbildetemperatur im Bereich von - 20 °C bis 55 °C und ein Acrylatcopolymer C2 mit einer Mindest-Filmbildetemperatur im Bereich von 60 °C bis 130 °C enthalten sind.

3. Lack nach Anspruch 1 oder 2, **dadurch gekennzeichnet, dass** das Acrylatcopolymer C2 frei von Styrol ist.

4. Lack nach Anspruch 3, **dadurch gekennzeichnet, dass** die Massenanteile bezogen auf die Gesamtmasse aller in der Mischung vorhandenen Acrylatcopolymeren, 30 % bis 70 % für das Styrol-Acrylat-Copolymer C1, und 70 % bis 30 % für Acrylatcopolymer C2 betragen.

5. Lack nach Anspruch 1, **dadurch gekennzeichnet, dass** als Bestandteile drei Acrylatcopolymere enthalten sind, ein Styrol-Acrylat-Copolymer C1 mit einer Mindest-Filmbildetemperatur im Bereich von - 20 °C bis 55 °C, ein Acrylatcopolymer C2 mit einer Mindest-Filmbildetemperatur im Bereich von 60 °C bis 130 °C, und ein styrolfreies Acrylatcopolymer C3 mit einer Mindest-Filmbildetemperatur im Bereich von -25 °C bis 40 °C.

6. Lack nach Anspruch 5, **dadurch gekennzeichnet, dass** die Massenanteile der drei Acrylatcopolymeren an der Gesamtmasse der Copolymeren 20 % bis 68 % für das Styrol-Acrylat-Copolymer C1, 70 % bis 30 % für Acrylatcopolymer C2, und 2 % bis 15 % für das Acrylatcopolymer C3 betragen.

7. Lack nach Anspruch 1, **dadurch gekennzeichnet, dass** der Lack bezogen auf die Masse der Mischung von Acrylatcopolymeren und Aminoalkylenpolyimin einen Massenanteil an Aminoalkylenpolyimin von 5 % bis 20 % enthält.

8. Lack nach Anspruch 1, **dadurch gekennzeichnet, dass** das Aminoalkylenpolyimin ein Oligomer oder Polymer mit einem gewichtsmittleren Polymerisationsgrad von 10 bis 2500 ist.

9. Lack nach Anspruch 8, **dadurch gekennzeichnet, dass** das Ammoalkylenpolyimin ein Diaminopolyäthylenimin ist.

10. Verfahren zur Herstellung von einem Lack nach Anspruch 1, **dadurch gekennzeichnet, dass** in einer Mischung von mindestens zwei Acrylatcopolymeren, einem Aminopolyalkylenimin, und Wasser Additive, Pigmente und Füllstoffe dispergiert werden.

11. Verfahren nach Anspruch 10, **dadurch gekennzeichnet, dass** das Aminoalkylenpolyimin vor dem Zusatz zu der Dispersion der Acrylatcopolymeren zunächst mit Wasser auf einen Festkörper-Massenanteil von weniger als 50 % verdünnt wird.

12. Verfahren nach Anspruch 10, **dadurch gekennzeichnet, dass** Pigmente, Füllstoffe und Additive zunächst mit mindestens einem Teil des Aminoalkylenpolyimins homogenisiert werden, und dass diesem Homogenisat danach eine wässrige Dispersion enthaltend die mindestens zwei Acrylatcopolymere zugesetzt wird.

13. Verwendung von Lacken nach Anspruch 1 zur Beschichtung von Formteilen aus Holzwerkstoffen.

14. Verwendung gemäß Anspruch 13 zur Reduktion der Formaldehydemission aus den beschichteten Holzwerkstoffen.

## Claims

1. Varnish comprising at least two acrylate copolymers as constituents, an aminopolyalkylenimine and water, **characterised in that** an acrylate copolymer having a minimum film-forming temperature in the range from -20 °C to 55 °C and a second acrylate copolymer having a minimum film-forming temperature of 60 °C to 130 °C are comprised as constituents.

2. Varnish according to Claim 1, **characterised in that** a styrene-acrylate copolymer C1 having a minimum film-forming temperature in the range from -20 °C to 55 °C and an acrylate copolymer C2 having a minimum film-forming temperature in the range from 60 °C to 130 °C are comprised as constituents.

3. Varnish according to Claim 1 or 2, **characterised in that** the acrylate copolymer C2 is free from styrene.

4. Varnish according to Claim 3, **characterised in that** the mass fractions based on the total mass of all acrylate copolymers present in the mixture are 30 % to 70 % for the styrene-acrylate copolymer C1, and 70 % to 30 % for acrylate copolymer C2.

5. Varnish according to Claim 1, **characterised in that** three acrylate copolymers are comprised as constituents: a styrene-acrylate copolymer C1 having a minimum film-forming temperature in the range from -20 °C to 55 °C, an acrylate copolymer C2 having a minimum film-forming temperature in the range from 60 °C to 130 °C, and a styrene-free acrylate copolymer C3 having a minimum film-forming temperature in the range from -25 °C to 40 °C.

6. Varnish according to Claim 5, **characterised in that** the mass fractions of the three acrylate copolymers in the total mass of the copolymers are 20 % to 68 % for the styrene-acrylate copolymer C1, 70 % to 30 % for acrylate copolymer C2, and 2 % to 15 % for the acrylate copolymer C3.

7. Varnish according to Claim 1, **characterised in that** the varnish, based on the mass of the mixture of acrylate copolymers and aminoalkylenepolyimine, comprises a mass fraction of aminoalkylenepolyimine of 5 % to 20 %.

8. Varnish according to Claim 1, **characterised in that** the aminoalkylenepolyimine is an oligomer or polymer having a weight-average degree of polymerisation of 10 to 2500.

9. Varnish according to Claim 8, **characterised in that** the aminoalkylenepolyimine is a diaminopoly-ethyleneimine.

10. Process for producing a varnish according to Claim 1, **characterised in that** additives, pigments and fillers are dispersed in a mixture of at least two acrylate copolymers, an aminopolyalkylenimine and water.

11. Process according to Claim 10, **characterised in that** prior to the addition to the dispersion of the acrylate copolymers, the aminoalkylenepolyimine is first diluted with water to a mass fraction of solids of less than 50 %.

12. Process according to Claim 10, **characterised in that** pigments, fillers and additives are first homogenised with at least a part of the aminoalkylene-polyimine, and **in that** thereafter an aqueous dispersion comprising the at least two acrylate copolymers is added to this homogenised composition.

13. Use of varnishes according to Claim 1 for coating of shaped parts made of wood-based materials.

14. Use according to Claim 13 for reducing the formaldehyde emission from the coated wood-based materials.

## Revendications

1. Laque contenant au moins deux copolymères d'acrylate en tant que composants, une aminopolyalkylène-imine et de l'eau, **caractérisée en ce qu'**en tant que composants sont contenus un copolymère d'acrylate ayant une température minimale de formation de film dans la plage de -20 °C à 55 °C, et un deuxième copolymère d'acrylate ayant une température minimale de formation de film de 60 °C à 130 °C.

2. Laque selon la revendication 1, **caractérisée en ce qu'**en tant que composants sont contenus un copolymère styrène/acrylate C1 ayant une température minimale de formation de film dans la plage de -20 °C à 55 °C, et un copolymère d'acrylate C2 ayant une température minimale de formation de film dans la plage de 60 °C à 130 °C.

3. Laque selon la revendication 1 ou 2, **caractérisée en ce que** le copolymère d'acrylate C2 est exempt de styrène.

4. Laque selon la revendication 3, **caractérisée en ce que** les fractions massiques, par rapport à la masse totale de tous les copolymères d'acrylate présents dans le mélange, valent de 30 % à 70 % pour le copolymère styrène/acrylate C1, et de 70 % à 30 % pour le copolymère d'acrylate C2.

5. Laque selon la revendication 1, **caractérisée en ce qu'**en tant que composants sont contenus trois copolymères d'acrylate, un copolymère styrène/acrylate C1 ayant une température minimale de formation de film dans la plage de -20 °C à 55 °C, un copolymère d'acrylate C2 ayant une température minimale de formation de film dans la plage de 60 °C à 130 °C et un copolymère d'acrylate C3 exempt de styrène, ayant une température minimale de formation de film dans la plage de -25 °C à 40 °C.

6. Laque selon la revendication 5, **caractérisée en ce que** les fractions massiques des trois copolymères d'acrylate, par rapport à la masse totale des copolymères, valent de 20 % à 68 % pour le copolymère styrène-acrylate C1, de 70 % à 30 % pour le copolymère d'acrylate C2, et de 2 % à 15 % pour le copolymère d'acrylate C3.

7. Laque selon la revendication 1, caractérisée en ce la laque contient, par rapport à la masse du mélange de copolymères d'acrylate et d'aminoalkylènepolyimine, une fraction massique d'aminoalkylènepolyimine de 5 % à 20 %.

8. Laque selon la revendication 1, **caractérisée en ce que** l'aminoalkylènepolyimine est un oligomère ou polymère ayant un degré moyen en poids de polymérisation de 10 à 2 500.

9. Laque selon la revendication 9, **caractérisée en ce que** l'aminoalkylènepolyimine est une diaminopolyéthylène-imine.

10. Procédé pour la préparation d'une laque selon la revendication 1, **caractérisé en ce que** dans un mélange d'au moins deux copolymères d'acrylate, d'une aminopolyalkylène-imine et d'eau, on disperse des additifs, des pigments et des charges.

11. Procédé selon la revendication 10, **caractérisé en ce qu'**avant l'addition à la dispersion des copolymères d'acrylate on dilue d'abord l'aminoalkylènepolyimine avec de l'eau jusqu'à une fraction massique de solides de moins de 50 %.

12. Procédé selon la revendication 10, **caractérisé en ce que** d'abord on homogénéise les pigments, charges et additifs avec au moins une partie de l'aminoalkylènepolyimine, et ensuite on ajoute à cet homogénat une dispersion aqueuse contenant lesdits au moins deux copolymères d'acrylate.

13. Utilisation des laques selon la revendication 1 pour le revêtement de pièces moulées en matériaux à base de bois.

14. Utilisation selon la revendication 13, pour la réduction de l'émission de formaldéhyde à partir des matériaux à base de bois revêtus.
